# EUROPÄISCHE PATENTSCHRIFT

(11) **EP 3 117 139 B1**
(45) Veröffentlichungstag und Bekanntmachung des Hinweises auf die Patenterteilung: **06.06.2018**
(21) Anmeldenummer: 15704263.1
(22) Anmeldetag: 04.02.2015
(51) Int. Cl.: F21K 99/00, F21V 5/00, F21V 5/04, F21V 7/00, F21Y 101/00, G02B 19/00

(54) **BELEUCHTUNGSVORRICHTUNG MIT OPTOELEKTRONISCHER LICHTQUELLE**
LIGHTING DEVICE COMPRISING OPTOELECTRONIC LIGHT SOURCE
DISPOSITIF D'ÉCLAIRAGE COMPRENANT UNE SOURCE DE LUMIÈRE OPTOÉLECTRONIQUE

(30) Priorität: 14.03.2014 DE 102014204793
(43) Veröffentlichungstag der Anmeldung: 18.01.2017
(73) Patentinhaber: LEDVANCE GmbH, 85748 Garching (DE)
(72) Erfinder: SCHMIDT, Tobias, 86159 Augsburg (DE)
(74) Vertreter: Schulz, Oliver Frank Michael
(86) Internationale Anmeldenummer: PCT/EP2015/052270
(87) Internationale Veröffentlichungsnummer: WO 2015/135697

(56) Entgegenhaltungen:
- EP-A1- 2 541 298
- EP-A1- 2 677 231
- DE-U1-202004 012 513
- JP-U- H0 225 111
- US-A1- 2005 225 988
- US-A1- 2011 148 270
- US-A1- 2012 195 046

## Beschreibung

### Technisches Gebiet

Die vorliegende Erfindung betrifft eine Beleuchtungsvorrichtung mit einer optoelektronischen Lichtquelle zur Emission von Licht und einem Optikkörper zur Verteilung des Lichts.

### Stand der Technik

Es ist bekannt, dass Beleuchtungsvorrichtungen auf optoelektronischer Basis gegenüber konventionellen Glüh- oder auch Leuchtstofflampen etwa hinsichtlich der Energieeffizienz oder die Lebensdauer betreffend Vorteile bieten. Eine Herausforderung kann darin bestehen, trotz der für optoelektronische Bauelemente typischen Lichtstärkeverteilung eine Beleuchtungsvorrichtung mit einer im Gesamten dennoch omnidirektionalen Abstrahlcharakteristik zu realisieren. Ein Ansatz im Stand der Technik geht insofern beispielsweise dahin, die Bauelemente selbst dreidimensional anzuordnen, etwa mit ihren Rückseiten einander zugewandt auf den Seitenflächen eines Quaders.

Der vorliegenden Erfindung liegt das technische Problem zugrunde, eine vorteilhafte Beleuchtungsvorrichtung mit einer optoelektronischen Lichtquelle anzugeben.

Dokumente EP2541298, JPH0225111U, DE202004012513U, US2005225988, EP2677231, US2012195046 und US2011148270 offenbaren Beleuchtungsvorrichtungen.

### Darstellung der Erfindung

Erfindungsgemäß löst diese Aufgabe eine Beleuchtungsvorrichtung mit den Merkmalen des Patentanspruchs 1.

Insbesondere umfasst die Beleuchtungsvorrichtung eine optoelektronische Lichtquelle zur Emission von Licht in einen Raumwinkelbereich um eine Längsachse und einen zumindest teilweise lichtdurchlässigen Optikkörper mit Lichtdurchtrittsflächen, nämlich einer Lichteintrittsfläche und einer Lichtaustrittsfläche zur Verteilung des Lichts, wobei der Optikkörper derart vorgesehen und angeordnet ist, dass ein Großteil des von der optoelektronischen Lichtquelle emittierten Lichts an der Lichteintrittsfläche in den Optikkörper eintritt und an der Lichtaustrittsfläche aus dem Optikkörper austritt, wobei das Licht dem Optikkörper nachgelagert einen Raumwinkelbereich ausfüllt, der um mindestens 20 % größer als ein Halbraum ist, und wobei zur Lichtmischung durch Lichtbrechung zumindest eine der Lichtdurchtrittsflächen zumindest bereichsweise derart mit Erhöhungen und Vertiefungen geformt ist, dass diese Lichtdurchtrittsfläche in zur Längsachse senkrechten Schnittebenen betrachtet jeweils eine geschlossene Kurve beschreibt, entlang welcher ein Punkt auf einem Umlauf um die Längsachse einen wiederholt zu- und wieder abnehmenden Abstand zur Längsachse hat, wobei der Abstand über einen Winkelbereich von 90° mindestens 2-mal zu- und wieder abnehmen soll.

Die Erfindung richtet sich also auf einen Optikkörper, der das Licht vereinfacht gesprochen zur Seite hin und jedenfalls zum Teil in einen Rückraum verteilt. Diese Lichtverteilung lässt sich beispielsweise mit Lichtstärkeverteilungskurven veranschaulichen, die zur Betrachtung im Zweidimensionalen in jeweils einer die Längsachse beinhaltenden Ebene genommen werden können und von dieser als 0°-Achse ausgehend die Lichtstärke bis +/- 180° veranschaulichen können.
als 0°-Achse ausgehend die Lichtstärke bis +/- 180° veranschaulichen können.

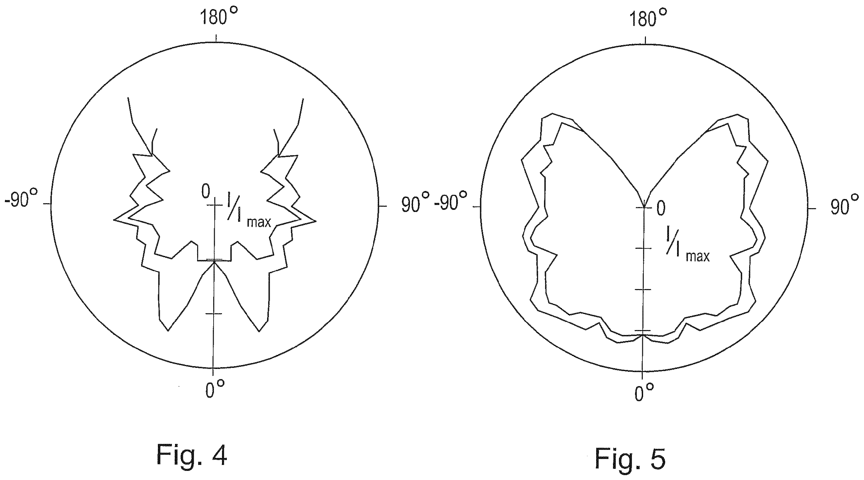

Die Gestaltung der Lichteintritts- und/oder Lichtaustrittsfläche mit bevorzugt durch Rillen gebildeten Vertiefungen und Erhebungen betrifft nun jedoch nicht die Verteilung des Lichts zur Seite hin an sich, sondern eine Homogenisierung dieser Verteilung hinsichtlich der Umlaufrichtung. Im Bild von eben sollen also beispielsweise Lichtstärkeverteilungskurven, die jeweils in die Längsachse beinhaltenden, zueinander jedoch winkelverdrehten Ebenen genommen werden, weniger stark voneinander abweichen (vgl. Fig. 5 im Vergleich zum Referenzfall gemäß Fig. 4).

Vereinfacht gesprochen soll der Optikkörper das Licht also prinzipiell zur Seite hin verteilen und dienen dabei konkret die Erhöhungen und Vertiefungen einer hinsichtlich eines Umlaufs um die Längsachse möglichst gleichmäßigen Verteilung. Der Erfinder hat festgestellt, dass es hinsichtlich der Umlaufrichtung im Fernfeld (dem Optikkörper nachgelagert) teils erhebliche Abweichungen von einer gewünschten Gleichmäßigkeit geben kann, wenn die Lichtquelle selbst nicht rotationssymmetrisch ist (hinsichtlich ihrer Abstrahlfläche(n)).

Viele optoelektronische Lichtquellen sind hinsichtlich ihrer Abstrahlflächen(n) nicht rotationssymmetrisch. Der Bruch der Rotationssymmetrie ergibt sich beispielsweise, wenn für die Lichtquelle eine Mehrzahl optoelektronische Bauelemente vorgesehen sind, wovon jedes eine eigene Lichtabstrahlfläche zur Verfügung stellt; die Lichtabstrahlflächen lassen sich dann allenfalls noch drehsymmetrisch anordnen (mit einer bestimmten Zähigkeit). Es kann jedoch auch im Falle eines einzigen optoelektronischen Bauelements mit einer einzigen Lichtabstrahlfläche die Abstrahlcharakteristik nicht rotationssymmetrisch sein, etwa wenn die Abstrahlfläche rechteckig/quadratisch ist (auch in Abhängigkeit vom Größenverhältnis Abstrahlfläche/Optikkörper).

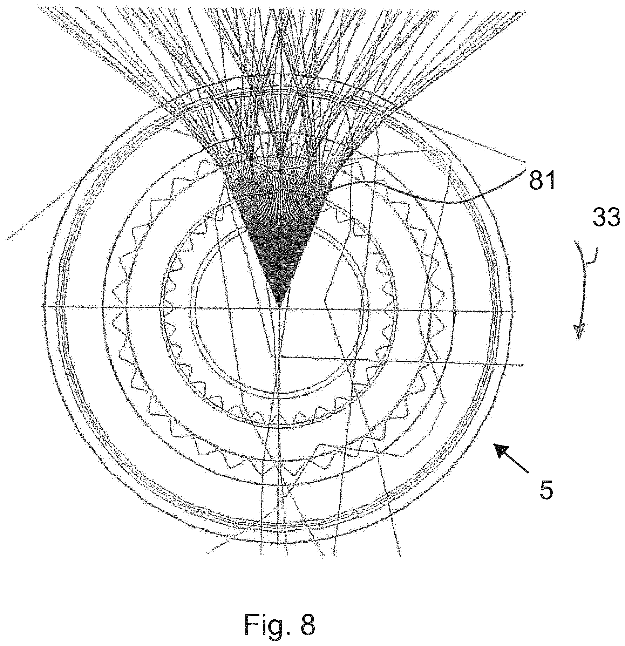

Mit den Erhöhungen/Vertiefungen wird nun gewissermaßen eine Zwischenstruktur geschaffen, die hinsichtlich der relevanten Größenskala kleiner als die Makrostruktur der Linse selbst ist, jedoch zugleich auch größer als typische Wellenlängen von sichtbarem Licht. Bildlich gesprochen ergibt sich die Homogenisierung, indem die Erhöhungen und Vertiefungen (im Folgenden auch "Zwischenstruktur") ein darauf fallendes Strahlenbündel aufweiten und so benachbarte Strahlenbündel zur Überlagerung bringen (siehe Fig. 8 zur Illustration). Ist nun beispielsweise der Lichtstrom des einen Bündels geringer als jener des anderen Bündels, ergibt sich ein gewisser Ausgleich.

Da die Homogenisierung den Umlauf um die Längsachse betrifft, wird hauptanspruchsgemäß zur näheren Konkretisierung der Zwischenstruktur auf zur Längsachse senkrechte Schnittebenen Bezug genommen. In einer solchen Schnittebene betrachtet beschreibt die entsprechende Lichteintritts- oder Lichtaustrittsfläche besagte Kurve. Diese verläuft nun derart, beispielsweise wellenförmig, dass der von der Längsachse entlang einer Geraden zur Kurve hin genommene Abstand wiederholt zu- und wieder abnimmt, wenn diese Gerade um die Längsachse rotiert wird.

Dabei ist die "Taktung" von Zu- und Wiederabnahme derart, dass der Abstand über einen Winkelbereich von 90° (genommen in Umlaufrichtung um die Längsachse) mindestens zweimal zu- und wieder abnimmt. Vorzugsweise ist die Zwischenstruktur derart vorgesehen, dass dies entsprechend in vier gemeinsam den 360°-Umlauf abdeckenden Winkelbereichen gilt. Mit dieser Beschränkung wird der Strukturgröße ein Maß vorgegeben, in welchem eben die Zwischenstrukturierung zum Ausdruck kommt.

In diesem Kontext ist auch eine Begrenzung der Strukturgrößen nach unten bevorzugt. In einer jeweiligen Schnittebene betrachtet sollen beispielsweise zwei zueinander nächst benachbarte Maxima, also Punkte der Kurve, an denen der Abstand maximal wird, einen Abstand von vorzugsweise mindestens 5 µm, in dieser Reihenfolge zunehmend bevorzugt mindestens 10 µm, 20 µm, 50 µm, 80 µm, 100 µm, 120 µm, 140 µm, 200 µm, 500 µm bzw. 1000 µm, haben. Als in absoluten Werten ausgedrückte Obergrenzen für den Abstand (zwischen nächstbenachbarten Maxima) können beispielsweise in dieser Reihenfolge zunehmend bevorzugt nicht mehr als 20 mm, 15 mm, 10 mm, 7 mm, 5 mm bzw. 2 mm bevorzugt sein.

Bereits die Bezugnahme auf die Lichtmischung durch "Lichtbrechung" grenzt die vorliegend relevanten Strukturgrößen von einer Mikrostrukturierung ab. "Lichtbrechung" verweist auf Strukturgrößen, deren Wirkung mithilfe von geometrischer Strahlenoptik beschrieben werden kann. Gleichwohl kann die Lichteintritts- und/oder Lichtaustrittsfläche im Allgemeinen zusätzlich zumindest bereichsweise auch mikrostrukturiert sein, etwa mit einer Mattierung versehen; bevorzugt sind die Lichteintritts- und die Lichtaustrittsfläche jedoch klar transparent.

Wenngleich die Erhebungen und Vertiefungen dreidimensional sind, werden sie in zur Längsachse senkrechten Schnittebenen charakterisiert, weil die Ausgestaltung in diesen Schnittebenen maßgeblich für die Verteilung des Lichts hinsichtlich der Umlaufrichtung ist. Die für die "Schnittebenen" jeweils konkretisierte Ausgestaltung soll, bezogen auf die Erstreckung, die der mit Erhöhungen/Vertiefungen versehene Bereich (der Eintritts-/Austrittsfläche) in einer zur Längsachse parallelen Richtung genommen hat, für vorzugsweise sämtliche in zumindest den mittleren 25 %, weiter bevorzugt 50 % bzw. 75 %, dieser Erstreckung liegenden Schnittebenen gelten.

Im Rahmen dieser Offenbarung bezieht sich "Hauptabstrahlrichtung" auf den Mittelwert sämtlicher Richtungsvektoren, entlang derer die Lichtquelle strahlt, wobei bei dieser Mittelwertbildung jeder Richtungsvektor mit der ihm zugehörigen Lichtstärke gewichtet wird. Jede Richtung, in die eine Lichtquelle, etwa eine Anordnung von mehreren Bauelementen, strahlt, kann als Vektor beschrieben werden, dem eine Lichtstärke zugeordnet werden kann. Bei einer einzigen LED ist die Hauptabstrahlrichtung ganz anschaulich typischerweise senkrecht zu einer Mitte der Lichtabstrahlfläche. Als "Mittelpunkt" einer Lichtquelle wird der Flächenschwerpunkt ihrer Lichtabstrahlfläche(n) bezeichnet; weist die Lichtquelle also mehrere Abstrahlflächen auf, ist der Mittelpunkt der gemeinsame Schwerpunkt aller Lichtabstrahlflächen der Anordnung. Gemeinsam legen die "Hauptabstrahlrichtung" und der "Mittelpunkt" einer Lichtquelle deren Längsachse fest. Die "Längsachse" ist also eine Achse, welche durch den Mittelpunkt der Lichtquelle verläuft und deren Richtung durch die Hauptabstrahlrichtung bestimmt ist.

In bevorzugter Ausgestaltung ist der Optikkörper drehsymmetrisch zu einer Optikkörper-Symmetrieachse, besonders bevorzugt rotationssymmetrisch dazu (von der Zwischenstruktur abgesehen). Besonders bevorzugt fällt diese Optikkörper-Symmetrieachse mit der Längsachse zusammen. Soweit bevorzugte Ausführungsformen ein Leuchtmittel mit einer in einem Hüllkolben vorgesehenen Beleuchtungsvorrichtung betreffen, ist der Hüllkolben vorzugsweise rotationssymmetrisch zu einer Hüllkolben-Symmetrieachse. Besonders bevorzugt fällt diese mit der Längsachse zusammen. Vorzugsweise fallen Hüllkolben-Symmetrieachse und Optikkörper-Symmetrieachse zusammen.

Typischerweise strahlt ein optoelektronisches Bauelement nur in einen Halbraum. Mit der Beleuchtungsvorrichtung soll Licht in einen Raumwinkelbereich abgestrahlt werden, der deutlich größer als ein Halbraum ist, etwa um in dieser Reihenfolge zunehmend bevorzugt mindestens 20 %, 30 %, 40 % bzw. 50 % größer als ein Halbraum.

Vorstehend wurde bereits auf die Lichtstärkeverteilung im Fernfeld Bezug genommen. Die Lichtstärke soll also für sämtliche Richtungen innerhalb des beschriebenen Raumwinkelbereichs von Null verschieden sein, und vorzugsweise mindestens 10 %, weiter bevorzugt mindestens 20 % bzw. 30 % einer maximalen Lichtstärke ausmachen. In bevorzugter Ausgestaltung wird in allen Richtungen, die mit der Hauptabstrahlrichtung einen Winkel zwischen 0° und einem Grenzwinkel einschließen, noch eine entsprechende Lichtstärke gemessen, wobei der Grenzwinkel zunehmend bevorzugt größer ist als 90°, 100°, 110°, 120°, 130°, 140°, 150° bzw. 160°. Andererseits kann dann beispielsweise bei Polarwinkeln größer 165° die Lichtstärke gleich Null sein.

Die Lichteintritts- und die Lichtaustrittsfläche haben zumindest auch in einer zur Längsachse parallelen Richtung eine Erstreckung, liegen also jedenfalls nicht ausschließlich senkrecht dazu. Die Lichteintrittsfläche hat im Gesamten betrachtet, d.h. wenn man von den Erfindungsgemäßen Zwischenstrukturen absieht, eine vorzugsweise konkave Form und bildet eine Art Dom, welcher die Lichtquelle überspannt. Die Lichtaustrittsfläche gliedert sich wie nachstehend weiter im Detail erläutert vorzugsweise in Teilflächen.

Die "optoelektronische Lichtquelle" weist zumindest ein "optoelektronisches Bauelement" auf (der Einfachheit halber auch nur "Bauelement"), vorzugsweise eine Mehrzahl (siehe vorne). Bei dem Bauelement kann es sich im Allgemeinen auch um einen nicht gehäusten LED-Chip handeln (Chip-Direktmontage). Vorzugsweise ist das Bauelement jedoch gehäust, wobei ein einziger LED-Chip für sich gehäust sein kann (Einzel-LED) oder auch eine Mehrzahl LED-Chips gemeinsam gehäust sein können, also etwa auf einem gemeinsamen Träger angeordnet und umfüllt sein können.

Es fällt zumindest ein "Großteil" des von der Lichtquelle emittierten Lichts auf die Lichteintrittsfläche, vorzugsweise mindestens 70 %, weiter bevorzugt mindestens 90 %, besonders bevorzugt mindestens 95 % des von der Lichtquelle emittierten Lichts. Idealerweise fällt das gesamte Licht auf die Lichteintrittsfläche.

Der Optikkörper kann im Allgemeinen auch aus Glas vorgesehen sein; bevorzugt ist jedoch ein Optikkörper aus einem Kunststoffmaterial, etwa aus Polycarbonat, Polymethylmethacrylat oder Silikon.

Weitere bevorzugte Ausführungsformen finden sich in den abhängigen Ansprüchen und der nachstehenden Beschreibung, wobei in der Darstellung auch weiterhin nicht immer im Einzelnen zwischen Vorrichtungs- und Verfahrens- bzw. Verwendungsaspekten unterschieden wird; jedenfalls implizit ist die Offenbarung hinsichtlich sämtlicher Anspruchskategorien zu lesen.

In bevorzugter Ausgestaltung ist die Zwischenstruktur auf der Lichteintrittsfläche vorgesehen. Dies kann etwa insofern vorteilhaft sein, als die Lichtaustrittsfläche in bevorzugter Ausgestaltung eben auch in Teilflächen untergliedert ist, also in der Regel einen ohnehin komplexeren Aufbau als die Lichteintrittsfläche zeigt; die Erhöhungen und Vertiefungen können deshalb gegebenenfalls leichter in letztere integriert werden. Wie ebenfalls nachstehend im Detail erläutert, ist die Lichtaustrittsfläche vorzugsweise zumindest bereichsweise auch Totalreflexionsfläche, und könnte das Vorsehen einer Zwischenstruktur zusätzlich darauf den optischen Gestaltungsaufwand erheblich erhöhen, weil die Erhebungen und Vertiefungen lokal auch die Totalreflexion beeinflussen können.

In bevorzugter Ausgestaltung sind mindestens 25 %, in dieser Reihenfolge zunehmend bevorzugt mindestens 40 %, 50 %, 60 %, 70 % bzw. 75 %, der Lichteintrittsfläche mit Erhöhungen und Vertiefungen geformt. Der "Lichteintrittsflächeninhalt", auf welchen sich die Prozentangaben beziehen, betrifft die Lichteintrittsfläche, also den von Licht durchsetzten Bereich einer gegebenenfalls auch größeren (vorzugsweise domartigen) Fläche. Der Teilbereichsflächeninhalt betrifft den Bereich der Lichteintrittsfläche, der mit der Zwischenstruktur versehen ist.

In bevorzugter Ausgestaltung werden die Vertiefungen durch Rillen gebildet (und damit auch die Erhebungen, die jeweils zwischen zwei Rillen liegen). Eine solche Rille beschreibt mit ihrem Rillengrund, entlang welchem sich die Länge der Rille bemisst, eine Linienform. Diese Rillenlinien sind derart orientiert, dass sie zumindest auch in einer zur Längsachse parallelen Richtung eine Erstreckung haben (die Rillenlinien liegen also nicht ausschließlich in einer zur Längsachse senkrechten Ebene).

Die Rillenlinien können im Allgemeinen auch tatsächlich parallel zur Längsachse verlaufen, nämlich im Falle einer die Längsachse zylindrisch umgebenden Lichteintrittsfläche. Da jedoch eine geneigt zur Längsachse verlaufende Lichteintrittsfläche bevorzugt ist, haben die Rillenlinien (neben der Erstreckung parallel zur Längsachse) vorzugsweise auch eine Erstreckung senkrecht zur Längsachse.

Die parallel zur Längsachse genommene Erstreckung der Rillenlinie soll vorzugsweise ein Vielfaches der Rillenweite ausmachen, etwa in dieser Reihenfolge zunehmend bevorzugt mindestens das 5-fache, 10-fache, 15-fache bzw.

20-fache. Bezogen auf die Länge der Rille kann die parallel zur Längsachse genommene Erstreckung beispielsweise mindestens 30 %, vorzugsweise mindestens 50 %, weiter bevorzugt mindestens 70 %, davon ausmachen.

Im Allgemeinen können die Rillenlinien auch eine Erstreckung in Umlaufrichtung haben, sich also jeweils zumindest über einen Winkelabschnitt schraubenförmig um die Längsachse erstrecken (nicht notwendigerweise vollständig darum). Die "Umlaufrichtung" betrifft im Rahmen dieser Offenbarung generell einen Umlauf um die Längsachse.

Wenngleich also auch eine Schraubenform möglich ist, richtet sich eine bevorzugte Ausgestaltung auf sich nicht in Umlaufrichtung erstreckende Rillenlinien, also Rillen, deren jeweilige Rillenlinie jeweils vollständig in einer die Längsachse beinhaltenden Schnittebene liegt. Etwa im Falle auf einer domartigen Lichteintrittsfläche vorgesehener Rillen kann dies beispielsweise bei einem Optikkörper, der in einem formenden Verfahren hergestellt wird, etwa durch Spritzguss, das Entformen erleichtern.

Im Falle der bevorzugt durch Rillen gebildeten Zwischenstruktur bestimmen die Rillen dann dementsprechend den Verlauf der Kurve in einer jeweiligen Schnittebene. Auf der Lichteintrittsfläche nimmt der Abstand des Punkts zur Längsachse also von einer Erhebung (zwischen zwei Rillen) zum Rillengrund hin zu, um dann von diesem zur nächstbenachbarten Erhebung wieder abzunehmen.

Auch unabhängig von der konkreten Ausgestaltung mit Rillen, vorzugsweise jedoch in Kombination damit, ist bevorzugt, dass der Abstand auf einer Vollumlaufstrecke mindestens 5-mal zu- und wieder abnimmt, in dieser Reihenfolge zunehmend bevorzugt mindestens 10-mal, 20-mal bzw. 30-mal zu- und wieder abnimmt. Die "Vollumlaufstrecke" erstreckt sich über einen Winkel von 360°, also einen Vollumlauf um die Längsachse. Bevorzugt ist dabei ferner, dass die Zu- und Abnahmen soweit möglich gleich verteilt sind.

Der Erfinder hat festgestellt, dass eine entsprechende Untergliederung einerseits nicht zu fein und so beispielsweise auch in einer Massenfertigung noch gut beherrschbar ist, andererseits damit jedoch eine gute Homogenisierung erreicht werden kann (siehe Fig. 5). Vorzugsweise ist die Zwischenstruktur über den gesamten Umlauf der geschlossenen Kurve verteilt vorgesehen und sind weiter bevorzugt die Zu- und Abnahmen (siehe vorstehende Werte) gleichmäßig, also äquidistant, über die Vollumlaufstrecke verteilt.

Die bevorzugte Äquidistanz der Zwischenstruktur meint, dass in einer jeweiligen zur Längsachse senkrechten Schnittebene betrachtet der Abstand zwischen zwei nächstbenachbarten Maxima (bei denen der Abstand zur Längsachse also maximal wird, also Vertiefungen auf der Eintrittsfläche) um nicht mehr als 20 %, vorzugsweise nicht mehr als 10 % von den jeweiligen Abständen abweichen soll, den die übrigen nächstbenachbarten Maxima jeweils zueinander haben.

Besonders bevorzugt sind also umlaufend eine Vielzahl Rillen vorgesehen, die zueinander drehsymmetrisch um die Längsachse angeordnet sind.

Eine weitere bevorzugte Ausführungsform betrifft die senkrecht zur Längsachse genommene "Höhe" der Erhöhungen und Vertiefungen, also in bevorzugter Ausgestaltung die Rillentiefe. In den zur Längsachse senkrechten Schnittebenen betrachtet verläuft die Kurve zwischen einer (bezogen auf den Abstand zur Längsachse) inneren Einhüllenden und einer äußeren Einhüllenden; auf der Eintrittsfläche grenzen an erstere die Erhöhungen (die Minima hinsichtlich der Abstandsfunktion) und an letztere die Vertiefungen (die Maxima hinsichtlich der Abstandsfunktion).

Für diese beiden Einhüllenden ist nun einerseits ein Mindestabstand bevorzugt, nämlich von mindestens 1 µm, in dieser Reihenfolge zunehmend bevorzugt mindestens 2 µm, 5 µm, 10 µm, 20 µm, 40 µm, 80 µm, 120 µm, 140 µm, 160 µm, 200 µm bzw. 500 µm. In einer jeweiligen Schnittebene betrachtet sollen beispielsweise ein Minimum der Kurve (bei dem der Abstand minimal wird) und ein nächstbenachbartes Maximum (bei dem der Abstand maximal wird), einen senkrecht zur Längsachse genommenen Abstand von vorzugsweise mindestens 1 µm haben (weitere Werte siehe Intervall im Satz zuvor), was besonders bevorzugt für sämtliche nächstbenachbarten Minima/Maxima gilt.

Den beiden Einhüllenden ist bevorzugt (auch) ein Maximalabstand vorgegeben, wobei das Vorsehen einer Obergrenze ausdrücklich auch unabhängig vom Vorsehen einer Untergrenze bevorzugt sein kann. Vorteilhafte Obergrenzen liegen bei in dieser Reihenfolge zunehmend bevorzugt höchstens 1/5, 1/10, 1/15, 1/20, 1/50 bzw. 1/100 einer Vollumlaufstrecke; die "Vollumlaufstrecke" ist die Wegstrecke, die der Punkt entlang der Kurve auf einem 360°-Umlauf zurücklegt. In absoluten Werten ausgedrückt können vorteilhafte Obergrenzen beispielsweise bei in dieser Reihenfolge zunehmend bevorzugt höchstens 20 mm, 10 mm, 5 mm bzw.

2 mm liegen; diese Werte sollen ausdrücklich auch hinsichtlich der im vorstehenden Absatz beschriebenen Betrachtung des Abstands (senkrecht zur Längsachse) nächstbenachbarter Minima/Maxima als bevorzugte Obergrenzen offenbart sein.

Im Falle des Konzepts der Einhüllenden kann "Abstand" auch den mittleren Abstand zwischen diesen meinen, soweit sich der Abstand der Einhüllenden über den Umlauf ändert; es wird dann also über die Umlaufstrecke gemittelt.

Vorzugsweise weist die Lichtquelle eine Mehrzahl Bauelemente (mit jeweiliger Abstrahlfläche und jeweiliger Bauelement-Hauptabstrahlrichtung) auf, die so angeordnet sind, dass sämtliche Bauelement-Hauptabstrahlrichtungen parallel zur Längsachse und damit auch parallel zueinander liegen. Es wird also vorzugsweise die gesamte Aufweitung der Abstrahlcharakteristik durch optische Elemente erreicht, insbesondere mit dem Optikkörper, was die Montage der Bauelemente vereinfachen kann. Diese müssen nämlich nicht, wie in dem zum Stand der Technik genannten Beispiel, aufwendig "dreidimensional" bestückt werden, sondern können vorzugsweise in einer gemeinsamen Ebene montiert sein.

Die "Bauelement-Hauptabstrahlrichtung" ergibt sich in analoger Weise wie die Hauptabstrahlrichtung der Lichtquelle, wobei eben nur das einzelne Bauelement betrachtet wird. Sie ergibt sich also als Mittelwert sämtlicher Richtungsvektoren, entlang derer das Bauelement strahlt, wobei bei dieser Mittelwertbildung jeder Richtungsvektor mit der ihm zugehörigen Lichtstärke gewichtet wird.

Weiter bevorzugt sind die Bauelemente zudem so angeordnet, dass sie sämtlich exzentrisch zur Längsachse liegen.

Wie bereits eingangs erwähnt, ist der Optikkörper vorzugsweise zur Längsachse drehsymmetrisch, besonders bevorzugt rotationssymmetrisch. Bei dieser Symmetriebetrachtung bleiben die Erhöhungen und Vertiefungen unberücksichtigt.

Die Stärke der Lichtmischung und Homogenisierung kann beispielsweise auch von der sich durch die Erhöhungen und Vertiefungen ergebenden Verteilung der Richtungen der Flächennormalen (auf die Lichteintrittsfläche in bevorzugter Ausgestaltung) abhängen. Insofern ist bevorzugt, dass in einer jeweiligen zur Längsachse senkrechten Schnittebene betrachtet eine jeweilige Normale auf die geschlossene Kurve in einem jeweiligen Normalenpunkt mit einer jeweiligen Verbindungslinie, die von dem jeweiligen Normalenpunkt zur Längsachse reicht (und senkrecht auf diese steht), einen Normalenwinkel von mindestens 10°, vorzugsweise mindestens 20°, und von höchstens 70°, vorzugsweise höchstens 50°, einschließt. Vorzugsweise liegt ein mittlerer Normalenwinkel, der sich als Mittelwert sämtlicher Normalenwinkel ergibt (gemittelt über die Vollumlaufstrecke), in einem entsprechenden Intervall (bei der Mittelung werden die Beträge der Winkel berücksichtigt, keine Vorzeichen).

Im Folgenden wird der Optikkörper an sich weiter im Detail erläutert. Vorzugsweise ist dessen Lichtaustrittsfläche zumindest bereichsweise zugleich auch Totalreflexionsfläche, tritt also ein Teil des Lichts (der unter geringem Einfallswinkel darauf fällt) aus dem Optikkörper aus, wird jedoch ein anderer Teil (unter einem Einfallswinkel größer θ_{c}) totalreflektiert. Von dem Licht, das an der Lichteintrittsfläche in den Optikkörper eintritt, wird ein Anteil von mindestens 10 %, in dieser Reihenfolge zunehmend bevorzugt mindestens 20 %, 30 % bzw. 40 %, vor einem Austritt aus dem Optikkörper totalreflektiert. Mit der Totalreflexion kann das Licht zur Seite hin und vorzugsweise auch in den Rückraum (Winkel größer 90° vgl. die vorstehenden Angaben) verteilt werden.

Die Funktionalität der Lichtaustrittsfläche als jedenfalls bereichsweise zugleich auch Totalreflexionsfläche ist, wie eben festgestellt, auch eine Folge der unterschiedlichen Einfallswinkel, also auch abhängig davon, unter welchen Winkeln das Licht in den Optikkörper eintritt. Insofern ist die gesamte Offenbarung, die die Lichtausbreitung im Optikkörper betrifft, ausdrücklich auf einen entsprechend ausgestalteten und zugleich auch entsprechend relativ zur Lichtquelle positionierten Optikkörper zu lesen.

Erfindungsgemäß gliedert sich die Lichtaustrittsfläche in zumindest eine erste Teilfläche und eine zweite Teilfläche, wobei die beiden derart angeordnet sind, dass an der ersten Teilfläche reflektiertes Licht an der zweiten Teilfläche austritt, und umgekehrt. Die beiden Teilflächen grenzen vorzugsweise in einer Kante aneinander, besonders bevorzugt einer umlaufenden Kante. Vorzugsweise gliedert sich die Lichtaustrittsfläche in eine Mehrzahl solcher Teilflächenpaare, also in mindestens zwei, weiter bevorzugt mindestens drei, Teilflächenpaare (die jeweils aus zwei wechselseitig als Totalreflexions- und Lichtaustrittsfläche zusammenwirkenden Teilflächen aufgebaut sind). Bei einem Teilflächenpaar muss generell nicht notwendigerweise das gesamte, an der einen Teilfläche reflektierte Licht an der anderen austreten (und umgekehrt), vorzugsweise tut dies jedoch zumindest ein Großteil, also mindestens 50 %, weiter bevorzugt mindestens 70 % bzw. 80 %, des jeweilig reflektierten Lichts.

Auch wenn die Zwischenstruktur zur Homogenisierung hinsichtlich der Umlaufrichtung auf der Lichteintrittsfläche angeordnet ist, kann die Lichtaustrittsfläche bei einer bevorzugten Ausführungsform gleichwohl zumindest bereichsweise auch mit einer anderen Zwischenstruktur ausgestattet sein, welche eine Homogenisierung der Lichtstärkeverteilung hinsichtlich Polarwinkeln zur Längsachse betrifft, also eine Homogenisierung innerhalb einer die Längsachse beinhaltenden Schnittebene. Unter einem Polarwinkel soll im Rahmen dieser Offenbarung ein Winkel zwischen einer Lichtabstrahlrichtung und der Hauptabstrahlrichtung verstanden werden.

Diese im Folgenden beschriebene Ausführungsform wird im Übrigen auch unabhängig von der Homogenisierung in Umlaufrichtung als Erfindung gesehen und soll auch in dieser Form offenbart sein, also konkret auch unabhängig von der hauptanspruchsgemäßen Ausgestaltung der Lichteintritts-/Lichtaustrittsfläche mit Erhöhungen und Vertiefungen (die in den zur Längsachse senkrechten Schnittebenen wirksam sind).

Bei besagter Ausführungsform ist also die Lichtaustrittsfläche zumindest bereichsweise mit Rillen geformt, die jeweils eine Linienform beschreiben, wobei die Rillen derart verlaufen, dass die Rillenlinien zumindest auch in der Umlaufrichtung eine Erstreckung haben. Im Allgemeinen kann eine entsprechende Rillenlinie also beispielsweise auch spiralförmig sein, sich also hinsichtlich des Abstands zur Längsachse weiten und/oder neben der Erstreckung in Umlaufrichtung auch in einer zur Längsachse parallelen Richtung eine Erstreckung haben. Im letztgenannten Fall kann dann also beispielsweise zugleich eine Homogenisierung hinsichtlich der Umlaufrichtung (vgl. die vorstehende Beschreibung die Lage der Rillenlinien betreffend) als auch hinsichtlich der Polarwinkel erreicht werden.

Besonders bevorzugt sind die in Rede stehenden Rillen auf der Lichtaustrittsfläche jedoch derart vorgesehen, dass eine jeweilige Rillenlinie jeweils vollständig in einer zur Längsachse senkrechten Schnittebene liegt. Weiter bevorzugt ist dabei ein vollständiger Umlauf, bildet die Rillenlinie also eine geschlossene Kurve, besonders bevorzugt einen Kreis.

Wie bereits eingangs erwähnt, betrifft die Erfindung auch ein Leuchtmittel mit einer entsprechenden Beleuchtungsvorrichtung, wird letztere dann also in Kombination mit einem Sockelelement, über welches die Lichtquelle elektrisch betreibbar ist, und einem für das im Betrieb emittierte Licht zumindest teilweise lichtdurchlässigen, also klar oder diffus lichtdurchlässigen Hüllkolben vorgesehen. Der Hüllkolben kann mit einem offenen Ende vorgesehen sein. Die äußere Form der Beleuchtungsvorrichtung kann einer konventionellen Glühlampe nachempfunden sein, ist also vorzugsweise birnenförmig.

Die Beleuchtungsvorrichtung kann durch das offene Ende ein Stück weit in den Hüllkolben hineinversetzt montiert sein und ist üblicherweise zur Hüllkolbeninnenwand beabstandet, berührt diese also nicht. Der Hüllkolben kann im Allgemeinen auch diffus transparent sein, vorzugsweise ist er jedoch klar.

Das Sockelelement ist in eine Lampenfassung einschraub- oder ansteckbar, wobei letzteres sowohl aufsteck- als auch vorzugsweise einsteckbar meint. Besonders bevorzugt ist ein Schraubsockel, etwa des Typs E27.

Weiterhin betrifft die Erfindung auch die Verwendung einer vorliegend offenbarten Beleuchtungsvorrichtung bzw. eines entsprechenden Leuchtmittels zur Allgemeinbeleuchtung, vorzugsweise zur Beleuchtung eines Außen- oder Innenbereichs eines Gebäudes. Die Beleuchtungsvorrichtung gibt dabei Licht derart ab, dass auch bei Polarwinkeln größer 90° eine Lichtstärke vorliegt (weitere bevorzugte Intervallgrenzen siehe vorne).

Die Berücksichtigung "allein dieser" (der Beleuchtungsvorrichtung) meint, dass dabei eine weitere Lichtformung durch nachgelagerte Komponenten außer Betracht bleiben soll, etwa der Reflektor einer Leuchte, in welche das Leuchtmittel gesetzt wird.

### Kurze Beschreibung der Zeichnungen

Im Folgenden wird die Erfindung anhand eines Ausführungsbeispiels näher erläutert, wobei auch weiterhin nicht im Einzelnen zwischen den verschiedenen Anspruchskategorien unterschieden wird.

Im Einzelnen zeigt
- Fig. 1: ein Leuchtmittel mit einer Beleuchtungsvorrichtung mit einem Optikkörper in einer schematischen Seitenansicht;
- Fig. 2: das Leuchtmittel gemäß Fig. 1 ohne Hüllkolben und Optikkörper in einer Schrägansicht;
- die Fig. 3A bis 3D: den Optikkörper einer erfindungsgemäßen Beleuchtungsvorrichtung in verschiedenen Ansichten;
- Fig. 4: Strahlstärkeverteilungskurven eines Optikkörpers ohne erfindungsgemäße Homogenisierung;
- Fig. 5: Strahlstärkeverteilungskurven eines Optikkörpers mit erfindungsgemäßer Homogenisierung;
- die Fig. 6A/6B: einen weiteren erfindungsgemäßen Optikkörper in verschiedenen Ansichten;
- die Fig. 7A/7B: weitere erfindungsgemäße Optikkörper mit alternativen Lichteintrittsflächen in schematischer Darstellung;
- Fig. 8: ein Ergebnis einer Raytracing-Simulation zur Illustration der Strahlbündelaufweitung.

### Bevorzugte Ausführung der Erfindung

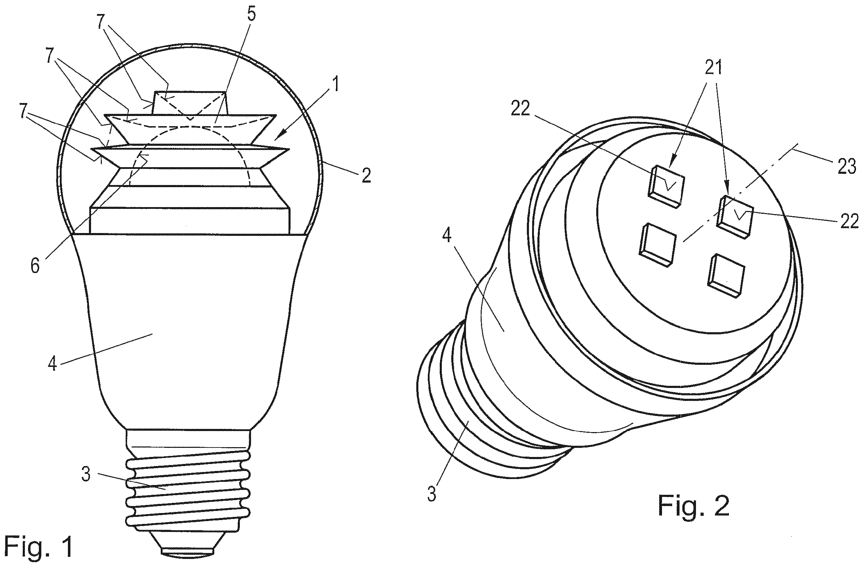

Fig. 1 zeigt ein Leuchtmittel mit einer erfindungsgemäßen Beleuchtungsvorrichtung 1, die also in einem Hüllkolben 2 angeordnet und über ein Sockelelement 3 elektrisch betreibbar ist. Zwischen dem matten Hüllkolben 2, der in der Figur der Übersichtlichkeit halber geschnitten dargestellt ist (und so den Blick auf die Beleuchtungsvorrichtung 1 freigibt), und dem Gewinde 3 ist ein Verbindungsabschnitt 4 angeordnet, in welchem die Treiber-/Steuerelektronik für den Betrieb der Beleuchtungsvorrichtung 1 untergebracht ist.

Ferner ist in Fig. 1 als Teil der Beleuchtungsvorrichtung 1 ein Optikkörper 5 zu erkennen. Die Beleuchtungsvorrichtung 1 umfasst ferner eine dann anhand von Fig. 2 im Detail erläuterte Lichtquelle, wobei das von dieser emittierte Licht an einer Lichteintrittsfläche 6 in den Optikkörper 5 eintritt, um dann zum Teil totalreflektiert zu werden und anschließend an Austrittsflächen 7 auszutreten. Die Austrittsflächen 7 sind zugleich auch Totalreflexionsflächen (für unter einem anderen Winkel einfallendes Licht).

Fig. 2 zeigt das Leuchtmittel ohne Hüllkolben 2 in einer Schrägansicht von oben, wobei auch der Optikkörper 5 nicht dargestellt ist. Dementsprechend ist als weiterer Bestandteil der Beleuchtungsvorrichtung 1 die Lichtquelle zu erkennen, nämlich eine Anordnung von LEDs 21. Jedes der vier Bauelemente 21 hat eine Lichtabstrahlfläche 22, an welcher im Betrieb Lambertsch Licht emittiert wird.

Die vier Bauelemente 21 bilden gemeinsam die optoelektronische Lichtquelle, die nicht rotationssymmetrisch zur Längsachse 23 ist. Die Bauelemente 21 sind zur Längsachse 23 drehsymmetrisch angeordnet.

Würde nun auf eine solche nicht rotationssymmetrische Lichtquelle 21 ein Optikkörper 5 ohne die erfindungsgemäße Zwischenstruktur gesetzt, hätte dies im Fernfeld eine hinsichtlich der Umlaufrichtung stark schwankende Lichtstärke zur Folge. Dies veranschaulichen die beiden Lichtstärkeverteilungskurven in Fig. 4, welche jeweils die Lichtstärkeverteilung in einer die Längsachse 23 beinhaltenden Ebene zeigen. Eine der Ebenen durchsetzt zwei Lichtabstrahlflächen 22 diagonal, die andere liegt um 45° gedreht dazu und durchsetzt keine der Lichtabstrahlflächen 22. Dementsprechend ist die Strahlstärke in der ersten Ebene erheblich größer als in der zweiten und weichen die beiden Kurven in Fig. 4 teils deutlich voneinander ab.

Die 0°-Achse in Fig. 4 fällt übrigens mit der Längsachse 23 zusammen. In Fig. 4 ist das Leuchtmittel "hängend" dargestellt, also im Vergleich zu Fig. 1 um 180° gedreht.

Mit der erfindungsgemäßen Zwischenstruktur kann nun eine Homogenisierung hinsichtlich der Umlaufrichtung erreicht werden, was die beiden in Fig. 5 dargestellten Lichtstärkeverteilungskurven veranschaulichen. Diese sind in denselben Ebenen wie die Lichtstärkeverteilungskurven gemäß Fig. 4 genommen, weichen allerdings erheblich weniger voneinander ab. Mit der nachstehend im Detail diskutierten Zwischenstruktur wird also vereinfacht gesprochen ein Strahlenbündel hoher Intensität, das in der ersten Ebene den hohen Strahlstärkewert bedingen würde, hinsichtlich der Umlaufrichtung ein Stück weit aufgefächert (vgl. Fig. 8) und gleicht es damit eine geringere Strahlstärke in der zweiten Ebene aus.

Beim Vergleich der Fig. 4 und 5 ist zu beachten, dass die beiden Polardiagramme die Strahlstärke jeweils auf ihren jeweiligen Maximalwert normiert zeigen. Aufgrund der starken Schwankungen in Fig. 4 ist der Maximalwert dort größer, reicht also die Skala weiter als in Fig. 5. Die Strahlstärkeverteilungskurven gemäß Fig. 5 sind im Vergleich zu jenen gemäß Fig. 4 also gestreckt, die Abweichung zwischen den Kurven ist also noch kleiner als optisch im Vergleich zu Fig. 4 erkennbar.

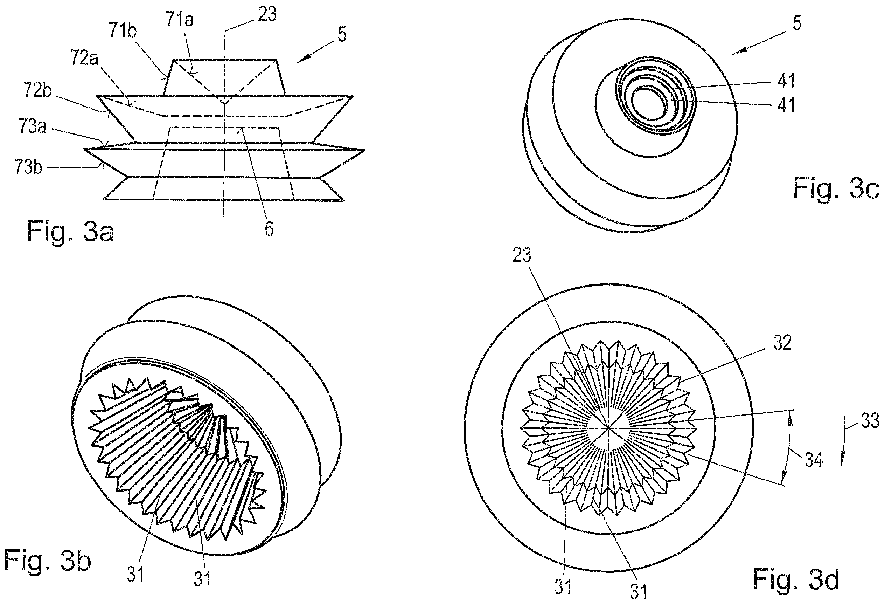

Die Fig. 3A bis 3D illustrieren nun den Optikkörper 5 weiter im Detail, wobei in der Schrägansicht von unten gemäß Fig. 3B und in der Unteransicht gemäß Fig. 3D die mit Rillen ausgebildete Lichteintrittsfläche zu erkennen ist. Mit ihrem jeweiligen Rillengrund beschreiben die Rillen Rillenlinien 31, die eine Erstreckung in einer Richtung parallel zur Längsachse 23 und auch in einer Richtung senkrecht dazu haben. Die Rillenlinien 31 haben keine Erstreckung in Umlaufrichtung, sie liegen anders ausgedrückt jeweils vollständig in einer die Längsachse 23 beinhaltenden Ebene.

Wenngleich Fig. 3D eine Unteransicht zeigt (und keinen Schnitt), veranschaulicht diese Darstellung eine Kurve 32, wie sie die Lichteintrittsfläche in einer zur Längsachse 23 senkrechten Schnittebene betrachtet beschreibt. Wird nun ein Punkt in Umlaufrichtung 33 entlang dieser Kurve 32 bewegt, nimmt der Abstand zwischen Punkt und Längsachse 23 wiederholt zu und ab, und zwar bereits auf einer Umlaufstrecke, die sich über einen Winkelbereich 34 von weniger als 25° erstreckt.

Der Abstand zwischen zwei nächstbenachbarten Maxima beträgt ca. 2,8 mm und nimmt entlang des ersten, von den Rillen abgesehen konusförmigen Eintrittsflächenbereichs nach oben bis auf ca. 1,8 mm ab. Bezogen auf eine Vollumlaufstrecke, also die Länge der Kurve 32, beträgt der Winkelabstand zwischen zwei nächst benachbarten Maxima jeweils ca. 1/30 von 360°.

Die durch die Rillen gebildeten Erhöhungen und Vertiefungen liegen in einer jeweiligen zur Längsachse 23 senkrechten Schnittebene betrachtet zwischen einer inneren Einhüllenden und einer äußeren Einhüllenden. An erstere grenzen die nach innen weisenden Erhebungen (bei denen der Abstand zur Längsachse 23 minimal wird), und an letztere die Vertiefungen (bei welchen der Abstand maximal wird).

Der Abstand der beiden Einhüllenden beträgt ca. 1 mm. Bezogen auf die eben genannte Vollumlaufstrecke soll der Abstand idealerweise nicht mehr als 1/25 einer Vollumlaufstrecke ausmachen; als Untergrenze sind 200 µm bevorzugt.

Fig. 3A zeigt den Optikkörper 5 in einer Seitenansicht, veranschaulicht also die für die Lichtverteilung in den die Längsachse 23 beinhaltenden Ebenen maßgeblichen Flächen. Wie bereits vorstehend erwähnt, gliedert sich die Reflexionsfläche 7 in Teilflächen, wobei eine erste Teilfläche 71a mit einer zweiten Teilfläche 71b ein erstes Flächenpaar 71a,b bildet. Ferner bilden eine zweite erste Teilfläche 72a und eine zweite zweite Teilfläche 72b ein zweites Flächenpaar 72a,b und bilden eine dritte erste Teilfläche 73a und eine dritte zweite Teilfläche 73b ein drittes Flächenpaar.

Die jeweiligen Teilflächen eines Flächenpaares 71a,b, 72a,b, 73a,b wirken derart zusammen, dass ein Teil des über die Eintrittsfläche 6 in den Optikkörper 5 eingetretenen Lichts an der ersten Teilfläche 71a, 72a, 73a totalreflektiert wird und jedenfalls der größere Teil dieses totalreflektierten Lichts an der zweiten Teilfläche 71b, 72b, 73b austritt. Gleichermaßen wird auch an den zweiten Teilflächen 71b, 72b, 73b ein Teil des an der Eintrittsfläche 6 in den Optikkörper 5 eingetretenen Lichts reflektiert und tritt es an der jeweils zugeordneten ersten Teilfläche 71a, 72a, 73a aus.

Im Ergebnis wird mit dem Optikkörper 5 eine Lichtverteilung wie in den Fig. 4 und 5 veranschaulicht erreicht, wird also Licht zur Seite hin und in den Rückraum verteilt und damit die gerichtete Lambertsche Abstrahlcharakteristik der Lichtquelle 21 in eine jedenfalls näherungsweise omnidirektionale Lichtverteilung umgesetzt.

Bei dem Optikkörper 5 gemäß Fig. 3C ist gegenüber den bisher beschriebenen Ausführungsformen zusätzlich eine Zwischenstruktur auf einem Bereich der Austrittsfläche 7 aufgebracht, und zwar auf der ersten Teilfläche 71a. In die erste Teilfläche 71a sind umlaufende Rillen eingebracht, deren jeweilige Rillenlinien 41 sich also kreisförmig um die Längsachse 23 erstrecken und jeweils vollständig in einer zu dieser senkrechten Ebene liegen.

In diesem Beispiel sind diese Rillen nur an der ersten Teilfläche 71a vorhanden; es können jedoch auch in die übrigen Teilflächen 71b, 72a,b, 73a,b entsprechend umlaufende Rillen eingebracht sein. Diese Rillen dienen im Gegensatz zu den vorstehend beschriebenen, auf der Lichteintrittsfläche 6 angeordneten Rillen nicht einer Homogenisierung die Umlaufrichtung 33 betreffend, sondern der Homogenisierung innerhalb einer jeweiligen, die Längsachse 23 beinhaltenden Ebene, also die Strahlstärkeverteilung hinsichtlich der Polarwinkel betreffend.

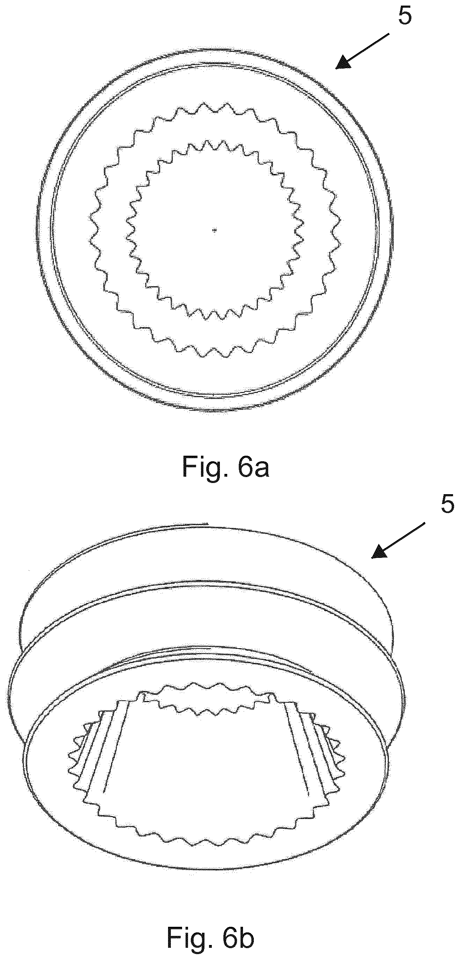

In den Figuren 3A bis 3D ist der Optikkörper 5 insofern in einer vereinfachten Darstellung gezeigt, als die Rillen dort spitz zulaufende Flanken haben, also im Schnitt ein Zick-Zick-Kurve resultiert. Demgegenüber zeigen die Figuren 6A und 6B einen Optikkörper 5 mit einer Lichteintrittsfläche, deren Formgebung so für eine tatsächliche Umsetzung in die Praxis bevorzugt ist, und zwar in einer Unteransicht (Fig. 6A) und einer Schrägansicht von unten (Fig. 6B).

Die Rillen sind bei diesem Optikkörper, hinsichtlich ihrer Flanken, so geformt, dass in einer zur Längsachse 23 senkrechten Schnittebene betrachtet die Kurve einen gewellten Verlauf zeigt. Der Erfinder hat mit einem entsprechend geformten Optikkörper für eine Lichtquelle 21 gemäß Fig. 2 eine gute Homogenisierung hinsichtlich der Umlaufrichtung 33 beobachtet.

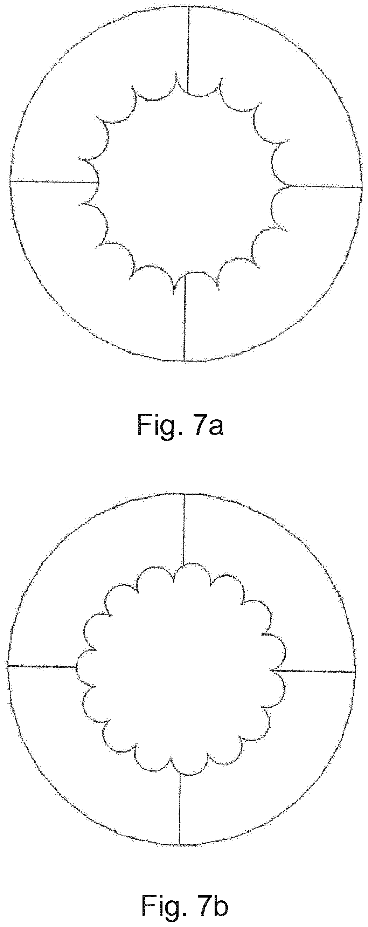

Die Fig. 7A und 7B illustrieren alternativ mögliche Kurvenformen (in einer zur Längsachse 23 senkrechten Schnittebene betrachtet). Eine entsprechende Lichteintrittsfläche kann ebenfalls mit Rillen geformt sein, wobei bei der Ausführungsform gemäß Figur 7A die Flanken der jeweiligen Rillen konvex sind, und bei der Ausführungsform gemäß Figur 7B konkav.

Fig. 8 illustriert ein Ergebnis einer *Raytracing-*Simulation, und zwar anhand eines Optikkörpers 5 in Aufsicht. Auf dessen Lichteintrittsfläche fällt ein Strahlenbündel 81, das an den Rillen (deren Struktur entspricht jener gemäß Fig. 6A/6B) aufgeweitet wird, und zwar hinsichtlich der Umlaufrichtung 33.

Auf benachbarte Lichteintrittsflächenbereiche fallende Strahlenbündel werden ebenso aufgeweitet, sodass die benachbarten Strahlenbündel also zur Überlagerung gebracht werden. Ist nun der Lichtstrom des einen Bündels geringer als jener des anderen Bündels, ergibt sich ein gewisser Ausgleich.

## Patentansprüche

1. Beleuchtungsvorrichtung mit
einer optoelektronischen Lichtquelle (21) zur Emission von Licht in einen Raumwinkelbereich um eine Längsachse (23) und
einem zumindest teilweise lichtdurchlässigen Optikkörper (5) mit Lichtdurchtrittsflächen (6, 7), nämlich einer Lichteintrittsfläche (6) und einer Lichtaustrittsfläche (7) zur Verteilung des Lichts,
wobei der Optikkörper (5) derart vorgesehen und angeordnet ist, dass ein Großteil des von der optoelektronischen Lichtquelle (21) emittierten Lichts an der Lichteintrittsfläche (6) in den Optikkörper (5) eintritt und an der Lichtaustrittsfläche (7) aus dem Optikkörper (5) austritt,
wobei das Licht dem Optikkörper (5) nachgelagert einen Raumwinkelbereich ausfüllt, der größer als ein Halbraum ist,
wobei die Lichtaustrittsfläche (7) zumindest bereichsweise zugleich auch eine Totalreflexionsfläche ist, wobei ein Anteil von mindestens 10 % des Lichts, das an der Lichteintrittsfläche (6) in den Optikkörper (5) eintritt, vor dem Austritt aus dem Optikkörper (5) totalreflektiert wird,
und wobei sich die Lichtaustrittsfläche (7) in zumindest eine erste Teilfläche (71a, 72a, 73a) und eine zweite Teilfläche (71b, 72b, 73b) gliedert, wobei die erste Teilfläche (71a, 72a, 73a) und die zweite Teilfläche (71b, 72b, 73b) derart zueinander angeordnet sind, dass an der ersten Teilfläche (71a, 72a, 73a) totalreflektiertes Licht an der zweiten Teilfläche (71b, 72b, 73b) austritt und umgekehrt,
**dadurch gekennzeichnet, dass** zur Lichtmischung durch Lichtbrechung zumindest die Lichteintrittsfläche (6) zumindest bereichsweise derart mit Erhöhungen und Vertiefungen geformt ist, dass die Lichteintrittsfläche (6) in zur Längsachse (23) senkrechten Schnittebenen betrachtet jeweils eine geschlossene Kurve beschreibt, entlang welcher ein Punkt auf einem Umlauf um die Längsachse (23) einen wiederholt zu- und wieder abnehmenden Abstand zur Längsachse (23) hat, wobei der Abstand über einen Winkelbereich von 90 ° mindestens 2-mal zu- und wieder abnimmt.

2. Beleuchtungsvorrichtung nach dem vorherigen Anspruch, bei welcher die Lichteintrittsfläche (6) einen Lichteintrittsflächeninhalt hat und die Erhöhungen und Vertiefungen in einem Teilbereich der Lichteintrittsfläche (6) mit einem Teilbereichsflächeninhalt vorgesehen sind, der mindestens 25 % des Lichteintrittsflächeninhalts ausmacht.

3. Beleuchtungsvorrichtung nach einem der vorstehenden Ansprüche, bei welcher die Vertiefungen durch Rillen gebildet sind, die jeweils eine Linienform beschreiben, wobei die Rillen derart verlaufen, dass die Rillenlinien (31) zumindest auch in einer zur Längsachse (23) parallelen Richtung eine Erstreckung haben.

4. Beleuchtungsvorrichtung nach dem vorherigen Anspruch, bei welcher die Rillen derart verlaufen, dass eine jeweilige Rillenlinie (31) jeweils vollständig in einer die Längsachse (23) beinhaltenden Ebene liegt.

5. Beleuchtungsvorrichtung nach einem der vorstehenden Ansprüche, bei welcher die Erhöhungen und Vertiefungen über die geschlossene Kurve vollständig umlaufend verteilt vorgesehen sind.

6. Beleuchtungsvorrichtung nach einem der vorstehenden Ansprüche, bei welcher in einer jeweiligen zur Längsachse (23) senkrechten Schnittebene betrachtet der Abstand des Punkts auf einer Vollumlaufstrecke, die sich über einen Winkelbereich von 360° erstreckt, mindestens 5-mal zu- und wieder abnimmt.

7. Beleuchtungsvorrichtung nach einem der vorstehenden Ansprüche, bei welcher in einer jeweiligen zur Längsachse (23) senkrechten Schnittebene betrachtet die Kurve zwischen einer inneren Einhüllenden und einer äußeren Einhüllenden verläuft, wobei die beiden Einhüllenden einen Abstand zueinander haben, der mindestens 1 µm und höchstens 1/5 einer Vollumlaufstrecke beträgt, welche sich über einen Winkelbereich von 360° erstreckt.

8. Beleuchtungsvorrichtung nach einem der vorstehenden Ansprüche, bei welcher in einer jeweiligen zur Längsachse senkrechten Schnittebene betrachtet eine jeweilige Normale auf die geschlossene Kurve in einem jeweiligen Normalenpunkt mit einer jeweiligen Verbindungslinie, die in derselben Schnittebene von dem jeweiligen Normalenpunkt zur Längsachse reicht, einen Normalenwinkel von mindestens 10° und von höchstens 70° einschließt.

9. Beleuchtungsvorrichtung nach einem der vorstehenden Ansprüche, bei welcher der Optikkörper (5) jedenfalls von den Erhebungen und Vertiefungen abgesehen zu einer Optikkörper-Symmetrieachse drehsymmetrisch, vorzugsweise rotationssymmetrisch, ist, wobei diese weiter bevorzugt mit der Längsachse (23) zusammenfällt.

10. Beleuchtungsvorrichtung nach einem der vorstehenden Ansprüche, bei welcher die Lichtaustrittsfläche (7) zur Lichtmischung durch Lichtbrechung zumindest bereichsweise mit Rillen geformt ist, die jeweils eine Linienform (41) beschreiben, wobei die Rillen derart verlaufen, dass die Rillenlinien (41) zumindest auch in der Umlaufrichtung (33) eine Erstreckung haben.

11. Leuchtmittel mit einer Beleuchtungsvorrichtung nach einem der vorstehenden Ansprüche, einem in eine Lampenfassung einschraub- oder ansteckbaren Sockelelement (3) und einem für das Licht zumindest teilweise durchlässigen Hüllkolben (2), wobei die Beleuchtungsvorrichtung in dem Hüllkolben (2) angeordnet ist und mit dem Sockelelement (3) elektrisch funktional verbunden ist.

12. Verwendung einer Beleuchtungsvorrichtung nach einem der Ansprüche 1 bis 10 oder eines Leuchtmittels nach Anspruch 11 zur Allgemeinbeleuchtung.

## Claims

1. Lighting device with
an optoelectronic light source (21) for emitting light into a solid angle region about a longitudinal axis (23) and
an at least partially translucent optical body (5) with light passage surfaces (6, 7), namely a light entry surface (6) and a light exit surface (7) for distributing the light,
wherein the optical body (5) is provided and arranged such that a majority of the light emitted by the optoelectronic light source (21) enters the optical body (5) at the light entry surface (6) and exits the optical body (5) at the light exit surface (7),
wherein the light downstream of the optical body (5) fills a solid angle range which is larger than a half space,
wherein the light exit surface (7) is also a total reflecting surface at least in some regions, wherein a proportion of at least 10% of the light entering the optical body (5) at the light entry surface (6) is totally reflected before leaving the optical body (5),
and wherein the light exit surface (7) is divided into at least a first partial surface (71a, 72a, 73a) and a second partial surface (71b, 72b, 73b), wherein the first partial surface (71a, 72a, 73a) and the second partial surface (71b, 72b, 73b) are arranged relative to each other such that light which is totally reflected at the first partial surface (71a, 72a, 73a) exits through the second partial surface (71b, 72b, 73b) and vice versa, **characterized in that** for the light mixture by light refraction at least the light entry surface (6) is formed at least in regions with elevations and depressions such that the light entry surface (6), viewed in sectional planes perpendicular to the longitudinal axis (23), respectively describes a closed curve along which a point on a rotation about the longitudinal axis (23) has a repeatedly increasing and decreasing distance to the longitudinal axis (23), wherein the distance over an angular range of 90° increases and decreases at least 2 times.

2. Lighting device according to the previous claim, wherein the light entry surface (6) has a light entry surface area and the elevations and depressions are provided in a portion of the light entry surface (6) having a portion area which constitutes at least 25 % of the light entry surface area.

3. Lighting device according to one of the above claims, wherein the depressions are formed by grooves each describing a line shape, the grooves extending in such a way that the groove lines (31) have an extension at least also in a direction parallel to the longitudinal axis (23).

4. Lighting device according to the previous claim, wherein the grooves run in such a way that a respective groove line (31) in each case lies completely in a plane containing the longitudinal axis (23).

5. Lighting device according to one of the above claims, wherein the elevations and depressions are completely circumferentially distributed over the closed curve.

6. Lighting device according to one of the above claims, wherein viewed in a respective sectional plane perpendicular to the longitudinal axis (23), the distance of the point on a full-circulation path, which extends over an angular range of 360°, increases and decreases at least 5 times.

7. Lighting device according to one of the above claims, wherein viewed in a respective sectional plane perpendicular to the longitudinal axis (23), the curve extends between an inner envelope and an outer envelope, the two envelopes having a distance from one another which is at least 1 µm and at most 1/5 of a full-circulation path which extends over an angular range of 360°.

8. Lighting device according to one of the above claims, wherein, viewed in a respective sectional plane perpendicular to the longitudinal axis, a respective normal on the closed curve in a respective normal point with a respective connecting line extending in the same sectional plane from the respective normal point to the longitudinal axis includes a normal angle of at least 10° and at most 70°.

9. Lighting device according to one of the above claims, wherein the optical body (5), apart from the elevations and depressions, is rotationally symmetrical, preferably axisymmetrical, to an optical body symmetry axis, which further preferably coincides with the longitudinal axis (23).

10. Lighting device according to one of the above claims, wherein the light exit surface (7) for light mixing by light refraction is formed at least in regions with grooves which each describe a line shape (41), wherein the grooves run in such a way that the groove lines (41) have an extension at least also in the circumferential direction (33).

11. Lamp having a lighting device according to one of the above claims, a base element (3) which can be screwed or plugged into a lamp socket and a envelope bulb (2) which is at least partially transparent to the light, the lighting device being arranged in the envelope bulb (2) and being electrically functionally connected to the base element (3).

12. Use of a lighting device according to any of claims 1 to 10 or a lamp according to claim 11 for general lighting.

## Revendications

1. Dispositif d'éclairage comprenant :
une source de lumière optoélectronique (21) pour l'émission de lumière dans une plage d'angles solides autour d'un axe longitudinal (23) et
un corps optique au moins en partie transparent (5) avec des surfaces de passage de lumière (6, 7), à savoir une surface d'entrée de lumière (6) et une surface de sortie de lumière (7) pour la distribution de la lumière,
dans lequel le corps optique (5) est conçu et agencé de sorte qu'une grande partie de la lumière émise par la source de lumière optoélectronique (21) entre par la surface d'entrée de lumière (6) dans le corps optique (5) et sorte du corps optique (5) par la surface de sortie de lumière (7),
dans lequel la lumière remplit en aval du corps optique (5) une plage d'angles solides qui est plus grande qu'un demi-espace,
dans lequel la surface de sortie de lumière (7) est au moins par zones également une surface de réflexion totale, dans lequel une fraction d'au moins 10 % de la lumière, qui entre dans le corps optique (5) par la surface d'entrée de lumière (6), est totalement réfléchie avant la sortie du corps optique (5), et
dans lequel la surface de sortie de lumière (7) se scinde en une première surface partielle (71a, 72a, 73a) et une seconde surface partielle (71b, 72b, 73b), dans lequel la première surface partielle (71a, 72a, 73a) et la seconde surface partielle (71b, 72b, 73b) sont agencées l'une vis-à-vis de l'autre de sorte que la lumière totalement réfléchie à la première surface partielle (71a, 72a, 73a) sorte par la seconde surface partielle (71b, 72b, 73b) et vice-versa,
**caractérisé en ce que**, pour le mélange de lumière par réfraction, au moins la surface d'entrée de lumière (6) est formée au moins par zones avec des élévations et des renfoncements de sorte que la surface d'entrée de lumière (6) décrive respectivement dans des plans de coupe perpendiculaires à l'axe longitudinal (23) une courbe fermée le long de laquelle un point a sur une rotation autour de l'axe longitudinal (23) une distance à l'axe longitudinal (23) qui augmente et diminue à nouveau de manière répétée, dans lequel la distance augmente et diminue à nouveau au moins 2 fois sur une plage d'angles solides de 90°.

2. Dispositif d'éclairage selon la revendication précédente, dans lequel la surface d'entrée de lumière (6) a une aire de surface d'entrée de lumière et les élévations et les renfoncements sont pourvus dans une zone partielle de la surface d'entrée de lumière (6) avec une aire de zone partielle qui constitue au moins 25 % de l'aire de la surface d'entrée de lumière.

3. Dispositif d'éclairage selon l'une quelconque des revendications précédentes, dans lequel les renfoncements sont formés par des rainures qui décrivent respectivement une forme linéaire, dans lequel les rainures s'étendent de manière à ce que les lignes de rainures (31) aient au moins une extension également dans la direction parallèle à l'axe longitudinal (23).

4. Dispositif d'éclairage selon la revendication précédente, dans lequel les rainures s'étendent de sorte qu'une ligne de rainure respective (31) se situe complètement dans un plan contenant l'axe longitudinal (23).

5. Dispositif d'éclairage selon l'une quelconque des revendications précédentes, dans lequel les élévations et les renfoncements sont complètement répartis autour de la courbe fermée.

6. Dispositif d'éclairage selon l'une quelconque des revendications précédentes, dans lequel, en considérant un plan de coupe respectif perpendiculaire à l'axe longitudinal (23), la distance du point sur un intervalle périphérique complet, qui s'étend sur une plage angulaire de 306°, augmente et diminue au moins 5 fois.

7. Dispositif d'éclairage selon l'une quelconque des revendications précédentes, dans lequel, en considérant un plan de coupe respectif perpendiculaire à l'axe longitudinal (23), la courbe s'étend entre une enveloppe interne et une enveloppe externe, dans lequel les deux enveloppes ont une distance mutuelle qui est au moins 1 µm et au maximum 1/5^{e} d'un intervalle périphérique complet qui s'étend sur une plage angulaire de 360°.

8. Dispositif d'éclairage selon l'une quelconque des revendications précédentes, dans lequel, en considérant un plan de coupe respectif perpendiculaire à l'axe longitudinal, une normale respective sur la courbe fermée inclut, en un point respectif de la normale, avec une ligne de liaison respective, qui va dans le même plan de coupe du point respectif de la normale à l'axe longitudinal, un angle de la normale au minimum de 10° et au maximum de 70°.

9. Dispositif d'éclairage selon l'une quelconque des revendications précédentes, dans lequel le corps optique (5) est, en tout cas à l'exception des élévations et des renfoncements, symétrique en rotation autour d'un axe de symétrie du corps optique, de préférence symétrique en rotation sous n'importe quel angle, dans lequel celui-ci coïncide en outre de préférence avec l'axe longitudinal (23).

10. Dispositif d'éclairage selon l'une quelconque des revendications précédentes, dans lequel la surface de sortie de lumière (7) pour le mélange de lumière par réfraction est formée au moins par zones avec des rainures qui décrivent respectivement une forme linéaire (41), dans lequel les rainures s'étendent de sorte que les lignes de rainures (41) aient une extension au moins également dans la direction circonférentielle (33).

11. Source de lumière avec un dispositif d'éclairage selon l'une quelconque des revendications précédentes, un élément de culot (3) vissable ou enfichable dans une douille de lampe et un piston enveloppant (2) au moins en partie transparent pour la lumière, dans lequel le dispositif de lumière d'éclairage est agencé dans le piston enveloppant (2) et est raccordé fonctionnellement au plan électrique avec l'élément de culot (3).

12. Utilisation d'un dispositif d'éclairage selon l'une quelconque des revendications 1 à 10 ou d'une source de lumière selon la revendication 11 pour l'éclairage général.
